# EUROPEAN PATENT SPECIFICATION

(11) **EP 0 603 243 B1**
(45) Date of publication and mention of the grant of the patent: **11.12.1996**
(21) Application number: 92918942.1
(22) Date of filing: 07.09.1992
(51) Int. Cl.: F16T 1/24, F16K 31/24

(54) **AUTOMATIC DRAIN VALVE FOR A COMPRESSED AIR FILTER**
AUTOMATISCHES ENTLEERUNGSVENTIL FÜR EIN DRUCKLUFTFILTER
SOUPAPE DE PURGE AUTOMATIQUE POUR FILTRE A AIR COMPRIME

(30) Priority: 11.09.1991 GB 9119390
(43) Date of publication of application: 29.06.1994
(73) Proprietor: Festo KG, D-73734 Esslingen (DE)
(72) Inventor: Clarke, Douglas, Cecil 54 Marling Crescent, Stroud Gloucestershire GL5 4LB (GB)
(74) Representative: Vetter, Hans, Dipl.-Phys. Dr.
(86) International application number: GB9201629
(87) International publication number: WO9305336

(56) References cited:
- DE-A- 2 906 233
- DE-B- 2 848 128
- US-A- 3 993 090

## Description

This invention relates to an automatic drain valve for a compressed air filter.

It is important to eliminate water and debris from compressed air used to operate pneumatic tools as otherwise the water and/or debris could cause damage to the tools. It is therefore common practice to provide a filter in a compressed air line. These filters collect water which must be drained regularly.

US-A-3993090 discloses an automatic drain valve for a compressed air filter, comprising a valve body having first and second fluid inlets and a fluid outlet, a first valve member for opening and closing a fluid communication path between the first fluid inlet and the fluid outlet, a second valve member for opening and closing the second fluid inlet, and a float operable in use as water collects in the filter to move the second valve member from a first position in which it closes the second fluid inlet to a second position in which it opens the second fluid inlet. The first valve opens the fluid communication path between the first fluid inlet and the fluid outlet when the second valve member moves to its second position to allow water to drain away from the filter and closes the fluid communication path between the first fluid inlet and the fluid outlet when the second fluid inlet closes as the water level in the filter falls.

However, there is no disclosure in US-A-3993090 that the first valve member will open the fluid communication path between the first fluid inlet and the fluid outlet when, in use, the supply of compressed air to the filter is shut off. Thus, when the compressed air supply to the drain valve of US-A-3993090 is shut off either overnight or on shutdown condensation can build up in the filter. This condensation will not be able to drain away and will be pushed down the line, when air pressure is turned on, to the pneumatic tool which the drain valve is trying to protect.

This is a serious drawback which is eliminated according to the present invention by providing spring means which move the first valve member to open the fluid communication path between the first fluid inlet and the fluid outlet when, in use, the supply of compressed air to the filter is shut off.

Preferably, the valve body defines therein a chamber and the first valve member includes a piston movable in the chamber between a first position in which the first valve member closes the fluid communication path between the first fluid inlet and the fluid outlet and a second position in which the first valve member opens the fluid communication path between the first fluid inlet and the fluid outlet, the first fluid inlet communicating with the chamber on one side of the piston and the second fluid inlet communicating with the chamber on the other side of the piston and there being an air bleed between said other side of the piston and the fluid outlet so that air can escape from said other side of the piston when the second valve member closes the second fluid inlet.

The air bleed conveniently comprises a bleed jet provided in a secondary piston which is urged into contact with the first mentioned piston by spring means and a through passage in the first mentioned piston for exhausting air which bleeds through the bleed jet to the fluid outlet. In this case, the bleed jet may be a small nick formed in the edge of an annular seat of the secondary piston, and the first mentioned piston may have a recess for receiving the secondary piston.

Preferably, the first fluid inlet is in use below the float and the second fluid inlet is in use above the float.

Preferably, the second valve member comprises a sealing element supported by a lever which is pivotally connected at one end to the valve body and at the other end to the float. In this case, means are preferably provided for adjusting the position of the float relative to the lever.

Advantageously, a strainer is provided for filtering fluid entering the first fluid inlet.

Preferably, the valve body comprises two parts which may be snap-fittable together and, where a strainer is provided, the strainer may be held between the two parts of the valve body.

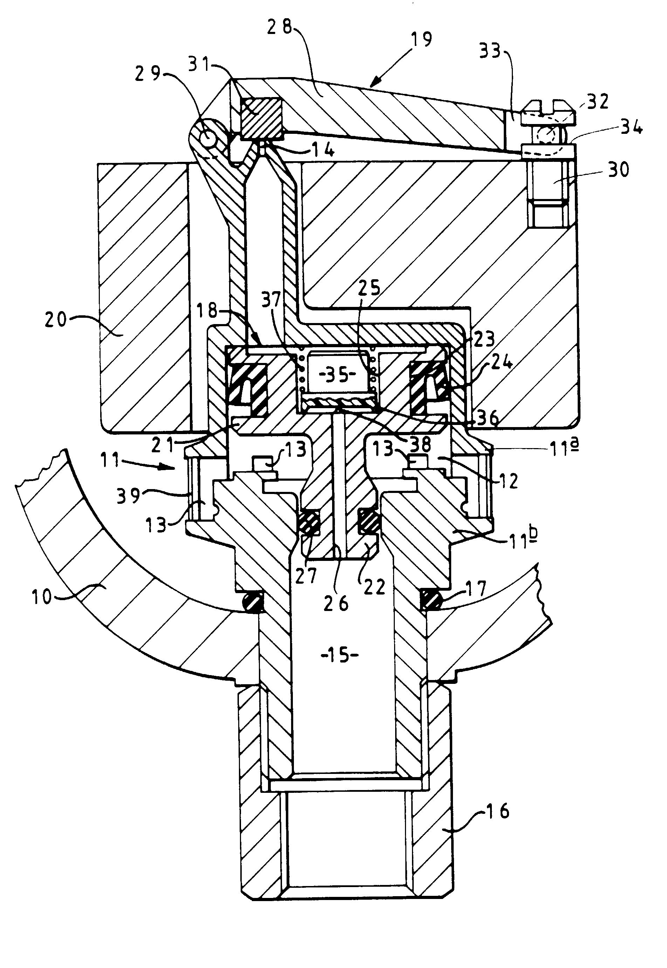

The invention will now be more particularly described by way of example with reference to the accompanying drawing which is a vertical section through one embodiment of an automatic drain valve according to the present invention.

Referring to the drawing, the automatic drain valve is shown fitted to a filter housing 10. The housing has a compressed air inlet (not shown), a compressed air outlet (not shown) and a filter element (not shown), which is typically of sintered bronze, between the compressed air inlet and the compressed air outlet. The air inlet side of the filter element communicates directly with the lower end of the housing 10 where the drain valve is located.

The drain valve comprises a valve body 11 formed of two parts 11a and 11b snap-fitted together. The valve body 11 defines therein a cylindrical chamber 12 and has a first fluid inlet provided by an annular array of slots 13 in the upper body part 11a where the latter joins the lower body part 11b, and a second fluid inlet in the form of a single, vertically extending orifice 14 at the upper end of the upper body part 11a. The lower body part 11b defines a fluid outlet 15 and extends through an aperture in the wall of the housing 10. The lower body part 11b is fixed to the housing 10 by a nut 16 which also serves as a connector for a drain hose (not shown) and an O-ring seal 17 is provided between housing 10 and the lower body part 11b.

The drain valve includes a first valve member 18 which is slidable within the valve body 11 and a second valve member 19 operable by a float 20.

The first valve member 18 comprises a piston 21 which is free to move within the chamber 12 and a stem 22 integral with the piston 21. The piston 21 has a peripheral groove 23 in which an annular seal 24 is located and a central recess 25 in its upper face. The stem 22 projects from the lower face of the piston 21 and into the fluid outlet 15. A passage 26 extends through the piston 21 and the stem 22 and communicates the base of the recess 25 with the fluid outlet 15.

The lower end of the stem 22 is of enlarged diameter and has an annular groove locating an 0-ring seal 27. The upper end of the fluid outlet 15 is of reduced diameter and co-operates with the seal 27 when the piston 21 is at an uppermost position within the chamber 12 to seal the outlet 15 from the chamber 12. However, when the piston is at a lowermost position within the chamber 12, the seal 27 no longer co-operates with the reduced diameter portion of the fluid outlet and fluid in the chamber 12 below the piston 21 can discharge through the outlet 15.

The float 20 is mounted about the upper body part 11a and is guided by the upper body part 11a for generally vertical movement relative thereto. The second valve member 19, which is operable by the float 20, comprises a lever arm 28 pivotally connected at one end to the body part 11a by a hinge 29 and at the other end to a set screw 30 which is threadably engaged with a hole in the float 20, and a sealing element 31 which is supported by the arm 28 and which closes the orifice 14 when the float 20 is in a lower position. The pivotal connection between the arm 28 and the screw 30 is formed by a pair of opposed pegs 32 which are provided on a bifurcated end portion 33 of the arm 28 and which are located in an annular groove 34 in the screw 30. The screw 30 provides for slight adjustment of the position of the float 20 relative to the valve body 11.

The slots 13 forming the first fluid inlet are below the float 20 and communicate with the chamber 12 on the underside of the piston 21. The orifice 14, on the other hand, is above the float 20 and communicates with the chamber 12 on the top side of the piston 21. Thus, water collecting in the filter will enter the chamber 12 via the slots 13 before the float 20 begins to rise, whilst the orifice 14, when open, will always be exposed to compressed air in the filter housing 10.

As the water level in the housing 10 rises, it will reach a level which will cause the float 20 to rise and this in turn will open the orifice 14. Compressed air will pass through the orifice 14 and the differential pressure applied to the piston 21 will move the piston downwards in the chamber 12 with the result that the seal 27 will move out of contact with the wall of the outlet 15 and the slots 13 will communicate with the outlet 15 to discharge water from the filter.

A secondary piston 35 made of plastics material is loosely mounted in the recess 25 in the upper face of the piston 21. The lower end of the piston 35 has a thin annular seat 36 which is urged into contact with the base of the recess 25 by a coiled compression spring 37. A small nick 38 provided by a knife cut is formed in the seat 36 to bleed air from the top side of the piston 21 to the outlet 15 via the passage 26 in the stem 22.

Thus, when the float 20 falls as water is discharged from the filter and the valve member 19 closes the orifice 14, the air pressure acting on the top side of the piston 21 will fall as a result of air being exhausted via the outlet 15 and the fluid pressure on the underside of the piston 21 will cause the latter to move upwards in the chamber 12 so that the chamber 12 is again sealed from the outlet 15.

In addition to urging the seat 36 of the secondary piston 35 into contact with the base of the recess 25, the compression spring 37 also serves to move the piston 21 downwards and open the outlet 15 when the supply of compressed air to the filter is shut off.

A strainer 39 is provided for filtering water entering the chamber 12 via the slots 13. The strainer 39 surrounds the slots 13 and is held in place between the two parts of the valve body 11.

In the embodiment shown, the float will not rise until slots 13 are fully submerged in water collecting in the filter. However, the float could be arranged to rise so as to open the orifice 14 when the slots 13 are only partly submerged in water.

## Claims

1. An automatic drain valve for a compressed air filter, comprising a valve body (11) having first and second fluid inlets (13, 14) and a fluid outlet (15), a first valve member (18) for opening and closing a fluid communication path between the first fluid inlet (13) and the fluid outlet (15), a second valve member (19) for opening and closing the second fluid inlet (14) by a sealing element (31) and a float (20) operable in use as water collects in the filter to move the second valve member from a first position in which it closes the second fluid inlet (14) to a second position in which it opens the second fluid inlet (14), the first valve member (18) being responsive in use to compressed air entering the second fluid inlet (14), when the second valve member (19) moves to its second position, to open the fluid communication path between the first fluid inlet (13) and the fluid outlet (15) to allow water to drain away from the filter and being responsive in use to the pressure at the first fluid inlet (13), when the second fluid inlet (14) closes as the water level in the filter falls, to close the fluid communication path between the first fluid inlet (13) and the fluid outlet (15), characterised in that spring means (37) move the first valve member (18) to open the fluid communication path between the first fluid inlet (13) and the fluid outlet (15) when, in use, the supply of compressed air to the filter is shut off.

2. An automatic drain valve as claimed in claim 1, wherein the valve body (11) defines therein a chamber (12) and the first valve member (18) includes a piston (21) movable in the chamber (12) between a first position in which the first valve member (18) closes the fluid communication path between the first fluid inlet (13) and the fluid outlet (15) and a second position in which the first valve member (18) opens the fluid communication path between the first fluid inlet (13) and the fluid outlet (15), the first fluid inlet (13) communicating with the chamber (12) on one side of the piston (21) and the second fluid inlet (14) communicating with the chamber (12) on the other side of the piston (21) and there being an air bleed between said other side of the piston (21) and the fluid outlet (15) so that air can escape from said other side of the piston (21) when the second valve member (19) closes the second fluid inlet (14).

3. An automatic drain valve as claimed in claim 2, wherein the air bleed comprises a bleed jet (38) provided in a secondary piston (35) which is urged into contact with the first mentioned piston (21) by said spring means (37) and a through passage (26) in the first mentioned piston (21) for exhausting air, which bleeds through the bleed jet, to the fluid outlet (15).

4. An automatic drain valve as claimed in claim 3, wherein the bleed jet (38) is a small nick formed in an annular seat (36) of the secondary piston (35).

5. An automatic drain valve as claimed in claim 3 or claim 4, wherein the first mentioned piston (21) has a recess (25) for receiving the secondary piston (35).

6. An automatic drain valve as claimed in any one of the preceding claims, wherein the first fluid inlet (13) is in use below the float (20) and the second fluid inlet (14) is in use above the float (20).

7. An automatic drain valve as claimed in any one of the preceding claims, wherein the second valve member (19) comprises a sealing element (31) supported by a lever (28) which is pivotally connected at one end to the valve body (11) and at the other end to the float (20), the second inlet (14) being displaced from the central axis of the valve body (11) towards said one end of the lever (28).

8. An automatic drain valve as claimed in any one of the preceding claims, wherein means (30) are provided for adjusting the position of the float (20) relative to the lever (28).

9. An automatic drain valve as claimed in any one of the preceding claims, wherein a strainer (39) is provided for filtering fluid entering the first fluid inlet (13).

10. An automatic drain valve as claimed in any one of the preceding claims, wherein the valve body (11) comprises two parts (11a, 11b).

11. An automatic drain valve as claimed in claim 10, wherein the two parts (11a, 11b) of the valve body (11) are snap-fitted together.

12. An automatic drain valve as claimed in claim 10 or claim 11 when dependent on claim 9, wherein the strainer (39) is held between the two parts (11a, 11b) of the valve body (11).

13. A compressed air filter equipped with an automatic drain valve according to any one of the preceding claims.

## Patentansprüche

1. Automatisches Entleerungsventil für ein Druckluftfilter, das einen Ventilkörper (11) aufweist mit einem ersten und einem zweiten Fluideinlaß (13, 14) und einem Fluidauslaß (15), einem ersten Ventilelement (18) zum Öffnen und Schließen eines Fluidverbindungspfades zwischen dem ersten Fluideinlaß (13) und dem Fluidauslaß (15), einem zweiten Ventilelement (19) zum Öffnen und Schließen des zweiten Fluideinlasses (14) durch ein Dichtungselement (31), und einem Schwimmer (20), der im Betrieb so arbeitet, daß er, wenn sich Wasser in dem Filter sammelt, das zweite Ventilelement von einer ersten Stellung, in der es den zweiten Fluideinlaß (14) schließt, in eine zweite Stellung bewegt, in der es den zweiten Fluideinlaß (14) öffnet, wobei das erste Ventilelement (18) im Betrieb auf Druckluft reagiert, die in den zweiten Fluideinlaß (14) eintritt, um den Fluidverbindungspfad zwischen dem ersten Fluideinlaß (13) und dem Fluidauslaß (15) zu öffnen, um das Abfließen von Wasser aus dem Filter zu ermöglichen, und im Betrieb auf den Druck an dem ersten Fluideinlaß (13) reagiert, wenn sich der zweite Fluideinlaß (14) beim Abfallen des Wasserstands in dem Filter schließt, um den Fluidverbindungspfad zwischen dem ersten Fluideinlaß (13) und dem Fluidauslaß (15) zu schließen, dadurch gekennzeichnet, daß eine Federeinrichtung (37) das erste Ventilelement (18) bewegt, um den Fluidverbindungspfad zwischen dem ersten Fluideinlaß (13) und dem Fluidauslaß (15) zu öffnen, wenn im Betrieb die Zufuhr von Druckluft zu dem Filter abgeschaltet wird.

2. Automatisches Entleerungsventil nach Anspruch 1, bei dem der Ventilkörper (11) in seinem Innern eine Kammer (12) festlegt, und das erste Ventilelement (18) einen Kolben (21) enthält, der sich in der Kammer (12) zwischen einer ersten Stellung, in welcher das erste Ventilelement (18) den Fluidverbindungspfad zwischen dem ersten Fluideinlaß (13) und dem Fluidauslaß (15) schließt, und einer zweiten Stellung, in welcher das erste Ventilelement den Fluidverbindungspfad zwischen dem ersten Fluideinlaß und dem Fluidauslaß öffnet, bewegen kann, wobei der erste Fluideinlaß (13) mit der Kammer (12) auf der einen Seite des Kolbens (21) in Verbindung steht und der zweite Fluideinlaß (14) mit der Kammer (12) auf der anderen Seite des Kolbens (21) in Verbindung steht und wobei eine Entlüftung zwischen der anderen Seite des Kolbens (21) und dem Fluidauslaß (15) vorliegt, so daß Luft von der anderen Seite des Kolbens (21) entweichen kann, wenn das zweite Ventilelement (19) den zweiten Fluideinlaß (14) schließt.

3. Automatisches Entleerungsventil nach Anspruch 2, bei dem die Entlüftung eine Entlüftungsdüse (38), die in einem sekundären Kolben (35) vorgesehen ist, der gegen den ersten erwähnten Kolben (21) mittels der Federeinrichtung (37) gedrückt wird, und einen Durchlaß (26) in dem ersten erwähnten Kolben (21) zum Ausstoßen von Luft, die durch die Entlüftungsdüse zu dem Fluidauslaß (15) entlüftet wird, umfaßt.

4. Automatisches Entleerungsventil nach Anspruch 3, bei dem die Entlüftungsdüse (38) eine kleine Kerbe ist, die in einem kreisringförmigen Sitz (36) des sekundären Kolbens (35) ausgebildet ist.

5. Automatisches Entleerungsventil nach Anspruch 3 oder 4, bei dem der erste erwähnte Kolben (21) eine Aussparung (25) zur Aufnahme des sekundären Kolbens (35) hat.

6. Automatisches Entleerungsventil nach einem der vorhergehenden Ansprüche, bei dem der erste Fluideinlaß (13) im Betrieb unterhalb des Schwimmers (20) ist und der zweite Fluideinlaß (14) im Betrieb oberhalb des Schwimmers (20) ist.

7. Automatisches Entleerungsventil nach einem der vorhergehenden Ansprüche, bei dem das zweite Ventilelement (19) ein Dichtungselement (31) aufweist, das durch einen Hebel (28) abgestützt wird, der an einem Ende mit dem Ventilkörper (11) und an dem anderen Ende mit dem Schwimmer (20) schwenkbar verbunden ist, wobei der zweite Einlaß (14) von der mittigen Achse des Ventilkörpers (11) zu dem einen Ende des Hebels (28) verschoben ist.

8. Automatisches Entleerungsventil nach einem der vorhergehenden Ansprüche, bei dem eine Einrichtung (30) zum Einstellen der Stellung des Schwimmers (20) relativ zu dem Hebel (28) vorgesehen ist.

9. Automatisches Entleerungsventil nach einem der vorhergehenden Ansprüche, bei dem ein Sieb (39) zum Filtern von Fluid vorgesehen ist, das in den ersten Fluideinlaß (13) eintritt.

10. Automatisches Entleerungsventil nach einem der vorhergehenden Ansprüche, bei dem der Ventilkörper (11) zwei Teile (11a, 11b) aufweist.

11. Automatisches Entleerungsventil nach Anspruch 10, bei dem die beiden Teile (11a, 11b) des Ventilkörpers (11) über eine Schnappverbindung zusammengebracht sind.

12. Automatisches Entleerungsventil nach Anspruch 10 oder 11 bei Rückbezug auf Anspruch 9, bei dem das Sieb (39) zwischen den beiden Teilen (11a, 11b) des Ventilkörpers (11) gehalten wird.

13. Druckluftfilter, das mit einem automatischen Entleerungsventil nach einem der vorhergehenden Ansprüche ausgestattet ist.

## Revendications

1. Soupape de purge automatique pour un filtre à air comprimé, comprenant un corps de soupape (11) ayant des première et deuxième entrées de fluide (13, 14) et une sortie de fluide (15), un premier élément de soupape (18) prévu pour ouvrir et fermer une voie de communication de fluide entre la première entrée de fluide (13) et la sortie de fluide (15), un deuxième élément de soupape (19) prévu pour ouvrir et fermer la deuxième entrée de fluide (14) par un élément d'étanchéité (31), et un flotteur (20) pouvant être actionné en service, lorsque de l'eau s'accumule dans le filtre, pour déplacer le deuxième élément de soupape d'une première position dans laquelle il ferme la deuxième entrée de fluide (14) à une deuxième position dans laquelle il ouvre la deuxième entrée de fluide (14), le premier élément de soupape (18) réagissant en service à l'entrée d'air comprimé par la deuxième entrée de fluide (14), lorsque le deuxième élément de soupape (19) se déplace vers sa deuxième position, pour ouvrir la voie de communication de fluide entre la première entrée de fluide (13) et la sortie de fluide (15) pour permettre à de l'eau d'être drainée hors du filtre, et réagissant en service à la pression au niveau de la première entrée de fluide (13), lorsque la deuxième entrée de fluide (14) se ferme lorsque le niveau d'eau chute dans le filtre, pour fermer la voie de communication de fluide entre la première entrée de fluide (13) et la sortie de fluide (15), caractérisée en ce que des moyens à ressort (37) déplacent le premier élément de soupape (18) pour ouvrir la voie de communication de fluide entre la première entrée de fluide (13) et la sortie de fluide (15) lorsque, en service, l'arrivée d'air comprimé dans le filtre est fermée.

2. Soupape de purge automatique selon la revendication 1, dans laquelle le corps de soupape (11) définit en lui une chambre (12) et le premier élément de soupape (18) comprend un piston (21) mobile dans la chambre (12) entre une première position dans laquelle le premier élément de soupape (18) ferme la voie de communication de fluide entre la première entrée de fluide (13) et la sortie de fluide (15) et une deuxième position dans laquelle le premier élément de soupape (18) ouvre la voie de communication de fluide entre la première entrée de fluide (13) et la sortie de fluide (15), la première entrée de fluide (13) communiquant avec la chambre (12) d'un côté du piston (21) et la deuxième entrée de fluide (14) communiquant avec la chambre (12) de l'autre côté du piston (21), et une fuite d'air se produisant entre ledit autre côté du piston (21) et la sortie de fluide (15), de sorte que de l'air peut s'échapper depuis ledit autre côté du piston (21) lorsque le deuxième élément de soupape (19) ferme la deuxième entrée de fluide (14).

3. Soupape de purge automatique selon la revendication 2, dans laquelle la fuite d'air comprend un jet de fuite (38) créé par un piston secondaire (35) qui est pressé en contact avec le piston premier cité (21) par lesdits moyens à ressort (37) et un passage traversant (26) dans le piston premier cité (21) pour laisser s'échapper de l'air, qui fuit par le jet de fuite, en direction de la sortie de fluide (15).

4. Soupape de purge automatique selon la revendication 3, dans laquelle le jet de fuite (38) est un petit coude formé dans un siège annulaire (36) du piston secondaire (35).

5. Soupape de purge automatique selon la revendication 3 ou 4, dans laquelle le piston premier cité (21) possède un renfoncement (25) pour recevoir le piston secondaire (35).

6. Soupape de purge automatique selon l'une quelconque des revendications précédentes, dans laquelle la première entrée de fluide (13) est, en service, au-dessous du flotteur (20) et la deuxième entrée de fluide (14) est, en service, au-dessus du flotteur (20).

7. Soupape de purge automatique selon l'une quelconque des revendications précédentes, dans laquelle la deuxième élément de soupape (19) comprend un élément d'étanchéité (31) soutenu par un levier (28) qui est lié de façon articulée à une extrémité au corps de soupape (11) et à l'autre extrémité au flotteur (20), la deuxième entrée (14) étant décalée par rapport à l'axe central du corps de soupape (11) en direction de ladite première extrémité du levier (28).

8. Soupape de purge automatique selon l'une quelconque des revendications précédentes, dans laquelle des moyens (30) sont prévus pour ajuster la position du flotteur (20) par rapport au levier (28).

9. Soupape de purge automatique selon l'une quelconque des revendications précédentes, dans laquelle un tamis (39) est prévu pour filtrer le fluide entrant dans la première entrée de fluide (13).

10. Soupape de purge automatique selon l'une quelconque des revendications précédentes, dans laquelle le corps de soupape (11) comprend deux parties (11a, 11b).

11. Soupape de purge automatique selon la revendication 10, dans laquelle les deux parties (11a, 11b) du corps de soupape (11) sont encliquetées l'une sur l'autre.

12. Soupape de purge automatique selon la revendication 10 ou 11 prise en liaison avec la revendication 9, dans laquelle le tamis (39) est tenu entre les deux parties (11a, 11b) du corps de soupape (11).

13. Filtre à air comprimé équipé d'une soupape de purge automatique selon l'une quelconque des revendications précédentes.
